# EUROPEAN PATENT SPECIFICATION

(11) **EP 2 500 250 B1**
(45) Date of publication and mention of the grant of the patent: **26.02.2014**
(21) Application number: 11158419.9
(22) Date of filing: 16.03.2011
(51) Int. Cl.: B62K 23/06, B62M 25/04

(54) **Speed control device for speed changing device of bicycle**
Geschwindigkeitskontrollvorrichtung für Gangschaltvorrichtung eines Fahrrads
Dispositif de contrôle de vitesse pour dispositif de changement de vitesse de bicyclette

(43) Date of publication of application: 19.09.2012
(73) Proprietor: Tien Hsin Industries Co., Ltd., Taichung City (TW)
(72) Inventor: Liao, Chia-Wei, Taichung City (TW)
(74) Representative: Lang, Christian

(56) References cited:
- EP-A1- 1 739 001
- EP-A1- 1 997 723
- US-A1- 2007 193 390

## Description

### Background of the Invention

### 1. Field of the Invention

The present invention relates generally to a speed control device, and more particularly, this invention relates to a speed control device which facilitates the operation of a speed changing device of a bicycle.

### 2. Description of the Related Art

U.S. Pat. No. 5,213,005, 5,361,645, 5,479,776 and 6,220,111 disclose a speed control device including one operation lever that user can use to up-shift the speed and another operation lever to down-shift the speed. However, such speed control device has the disadvantage that the operator could easily operate the wrong lever in a speed change operation.

U.S. Pat. No. 5,287,766 shows a speed control device which utilizes an operation lever for up-shifting and down-shifting the speed. The speed control device is particularly mounted on a straight handlebar type bicycles. US 2007/0193390 discloses a speed control device according to the preamble of claim 1. In spite of the advantage of speed control device employing one operation lever as discussed in the proceeding, it is believed that there is a need for improvement in the field of speed control device and more specifically in the curved handlebar type bicycles.

The present invention is, therefore, intended to obviate or at least alleviate the problems encountered in the prior art.

### Summary of the Invention

According to the present invention, the main purpose is to provide a speed control device, which is adapted to be used in connection with a derailleur type bicycle or internal gear hub type bicycle, has one operation mode for up-shifting the speed and another operation mode for down-shifting the speed. The two operation modes are affected by an operation lever, and with the operation lever being pivoted in a second rotation direction for the up-shifting operation and in a first rotation direction for the down-shifting operation.

The control assembly is adapted to effect multiple speed change in one stroke of the second engaging mechanism.

### Brief Description of the Drawings

Fig. 1 is a perspective view of a speed control device according to the present invention.
Fig. 2 is an exploded perspective view of the speed control device of Fig. 1.
Fig. 3 is an exploded perspective view of a control assembly embodying the present invention.
Fig. 4 is another exploded perspective view of the control assembly taken from a different angle than that of Fig. 3.
Fig. 5 is a side view of the control assembly embodying the present invention.
Fig. 6 is a cross-section view taken along line 6-6 of Fig. 5.
Fig. 7 is a cross-section view taken along line 7-7 of Fig. 5.
Fig. 8 is a cross-section view taken along line 8-8 of Fig. 5.
Fig. 9 is an extended view of Fig. 6 and shows an operation lever of the control assembly is pivoted in a second rotation direction to effect one speed change.
Fig. 10 is an extended view of Fig. 8 and shows the operation lever of the control assembly is pivoted in the second rotation direction to effect one speed change.
Fig. 11 an extended view of Fig. 7 and shows the control assembly in a position corresponding to Fig. 10.
Fig. 12 is an extended view of Fig. 10 and shows the control assembly accomplishing one speed change.
Fig. 13 is an extended view of Fig.8 and shows the operation lever of the control assembly is pivoted in the second rotation direction to effect three speed changes.
Fig. 14 is an extended view of Fig. 7 and shows the control assembly in a position corresponding to Fig. 13.
Fig. 15 shows the operation lever of the control assembly is pivoted in a first rotation direction to effect another speed change.
Fig. 16 shows a first angular step which is between a first engaging section and a corresponding tooth.
Fig. 17 is an extended view of Fig. 16 and shows the first engaging section engaged with the corresponding tooth.
Fig. 18 is an extended view of Fig. 17 and shows a second angular step which is between a second engaging section and a corresponding tooth.
Fig. 19 is an extended view of Fig. 18 and shows the second engaging section is engaged with the corresponding tooth.
Fig. 20 is an extended view of Fig. 19 and shows a pawl is engaged with a next tooth.
Fig. 21 shows a brake lever is pivoted toward a first end of a housing.

### Detailed Description of the Preferred Embodiment

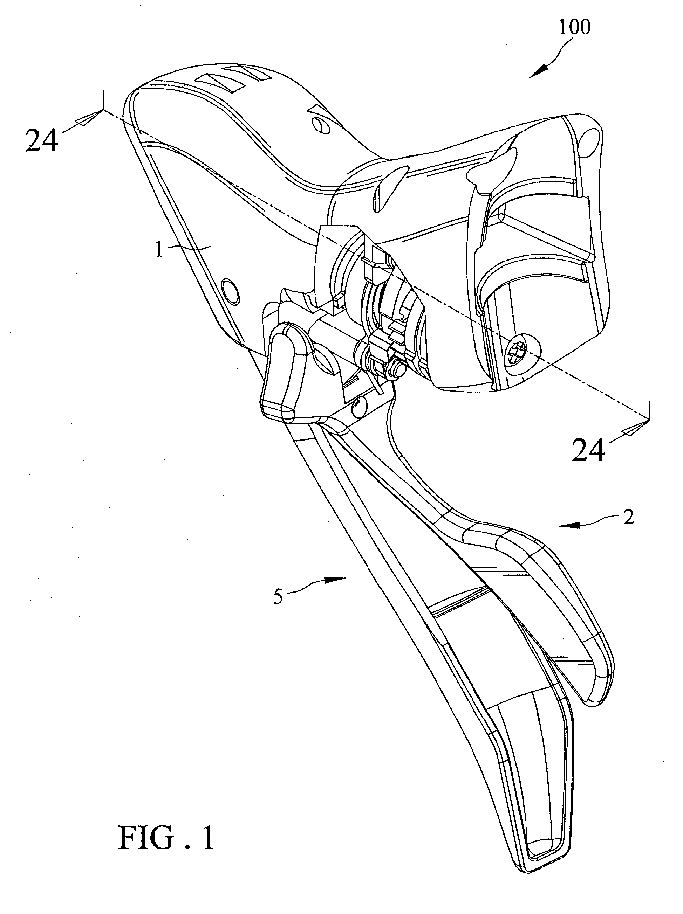

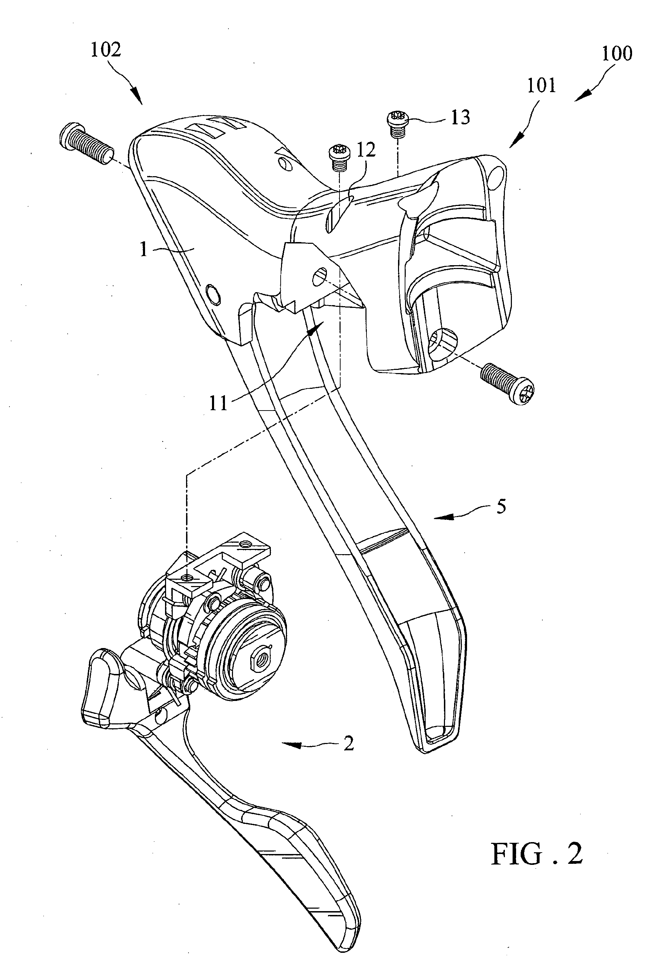

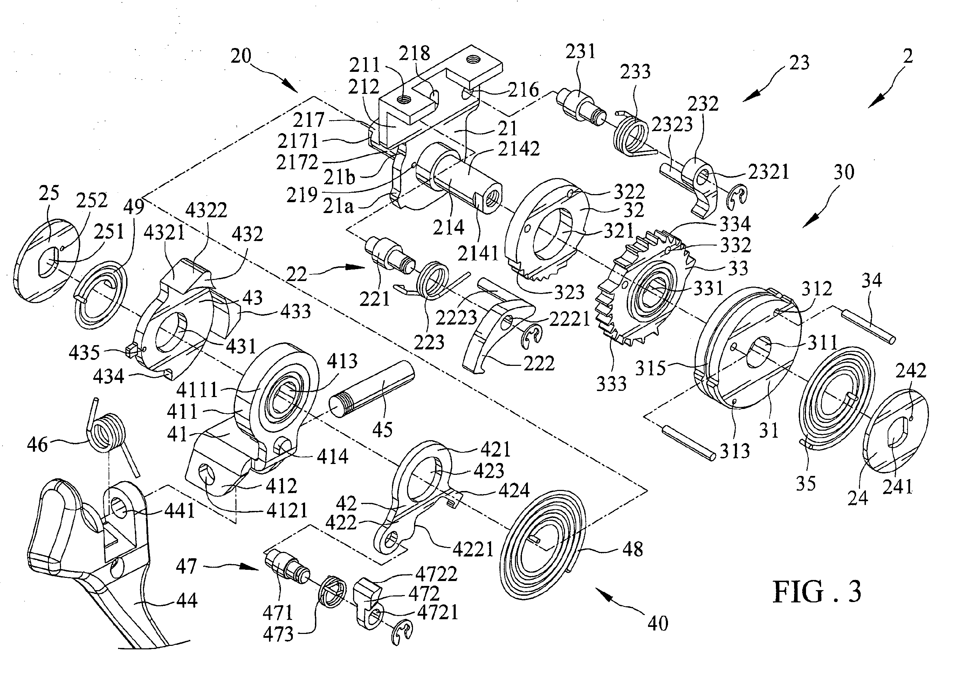

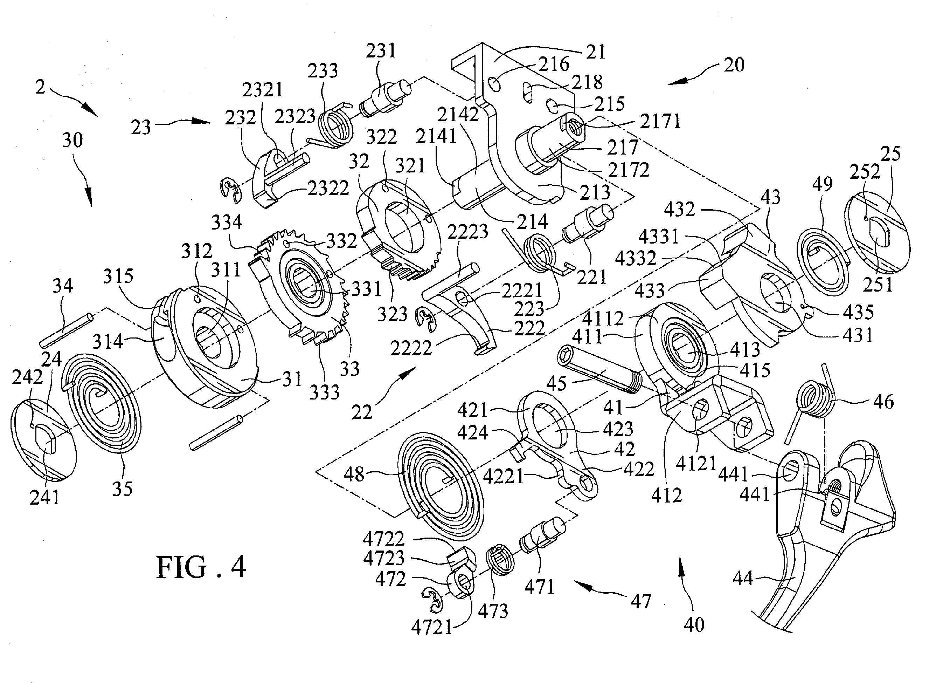

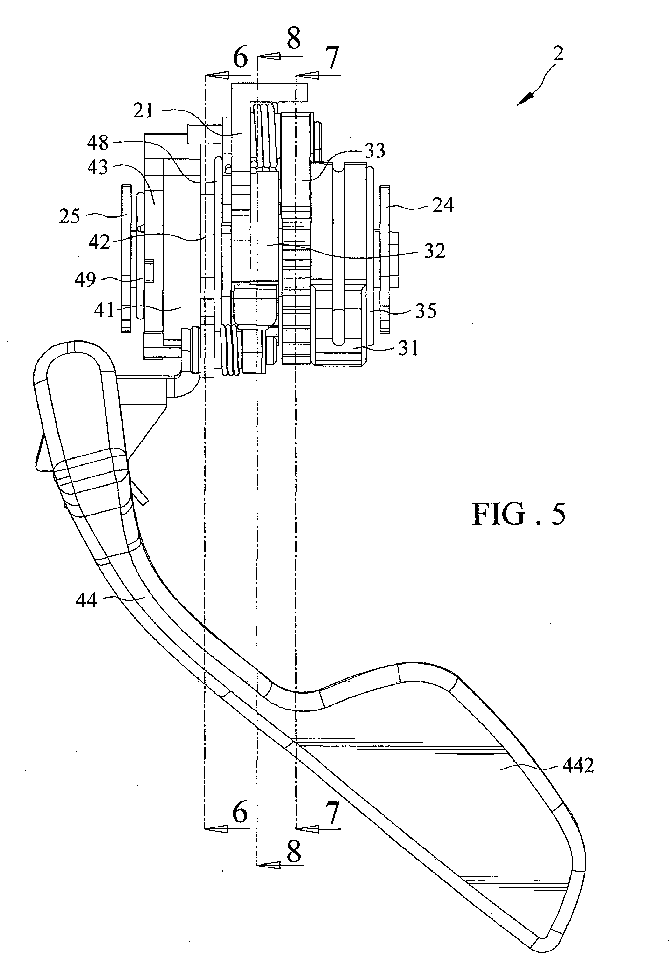

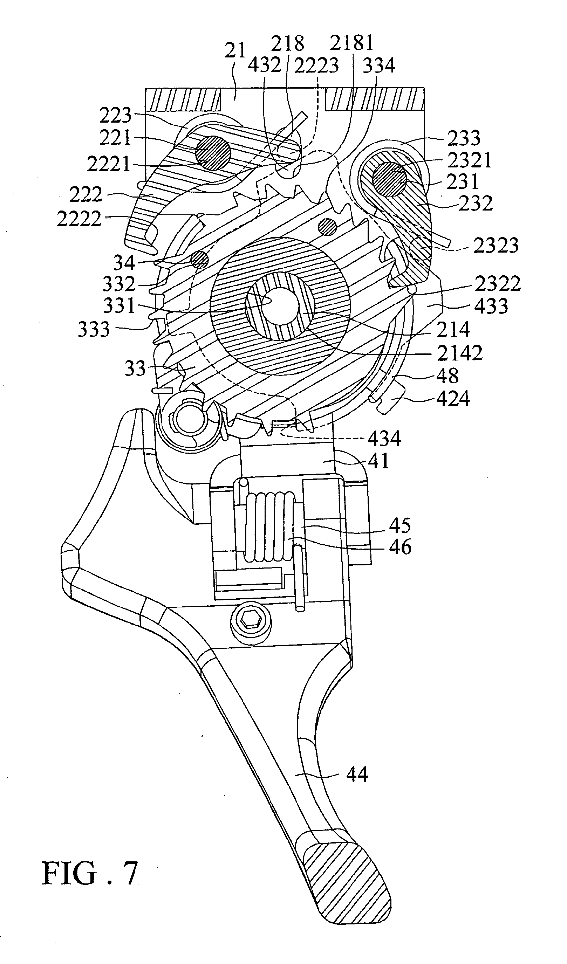

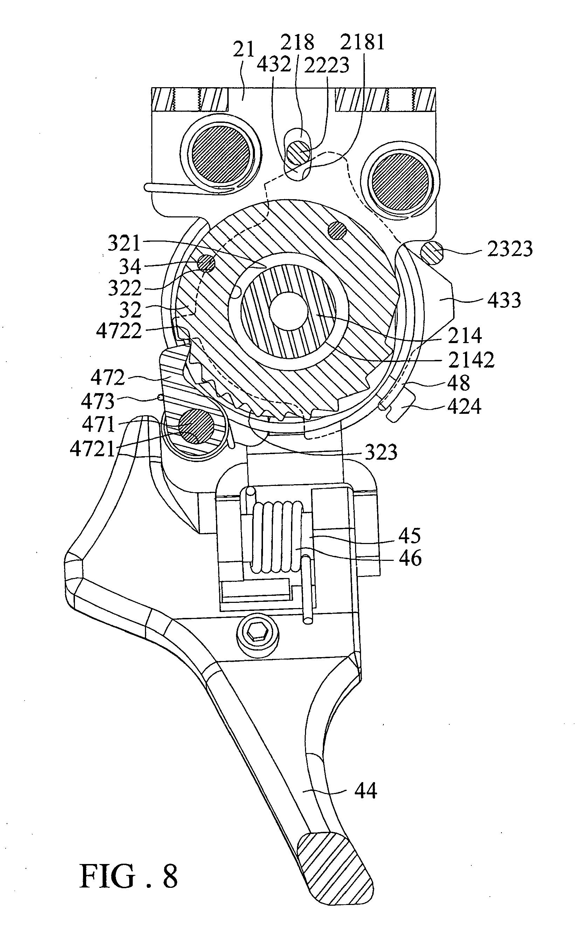

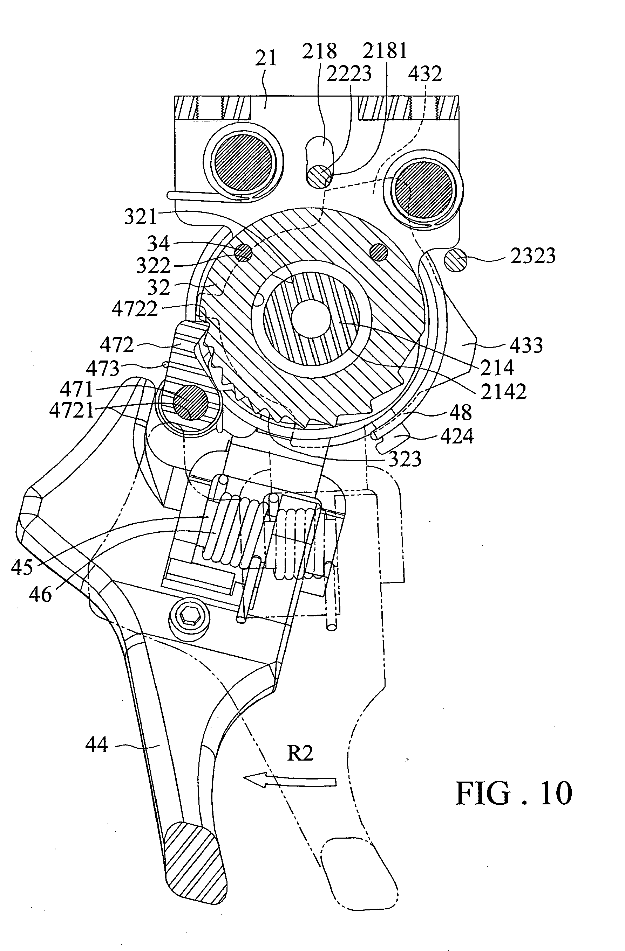

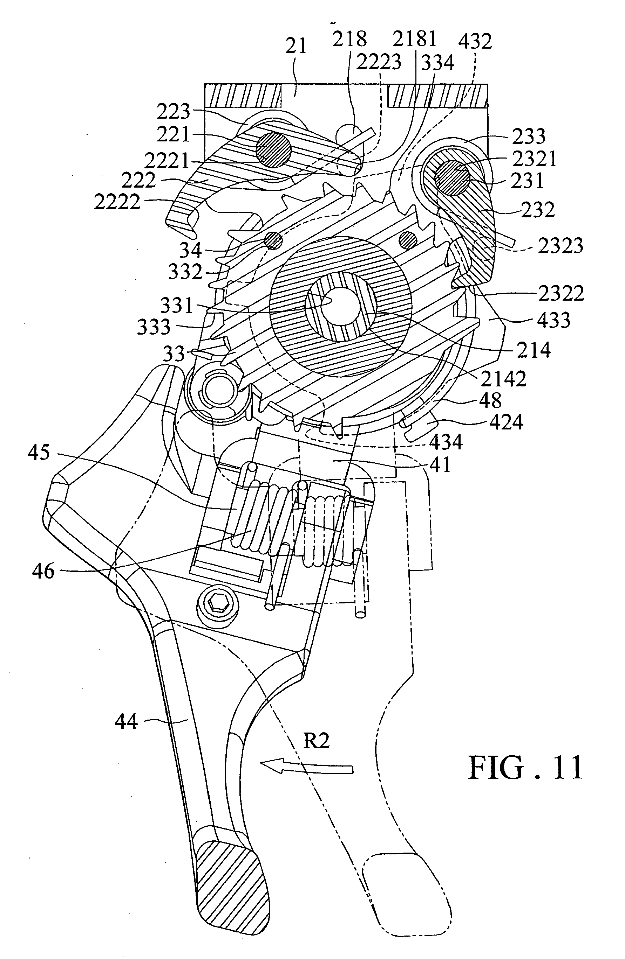

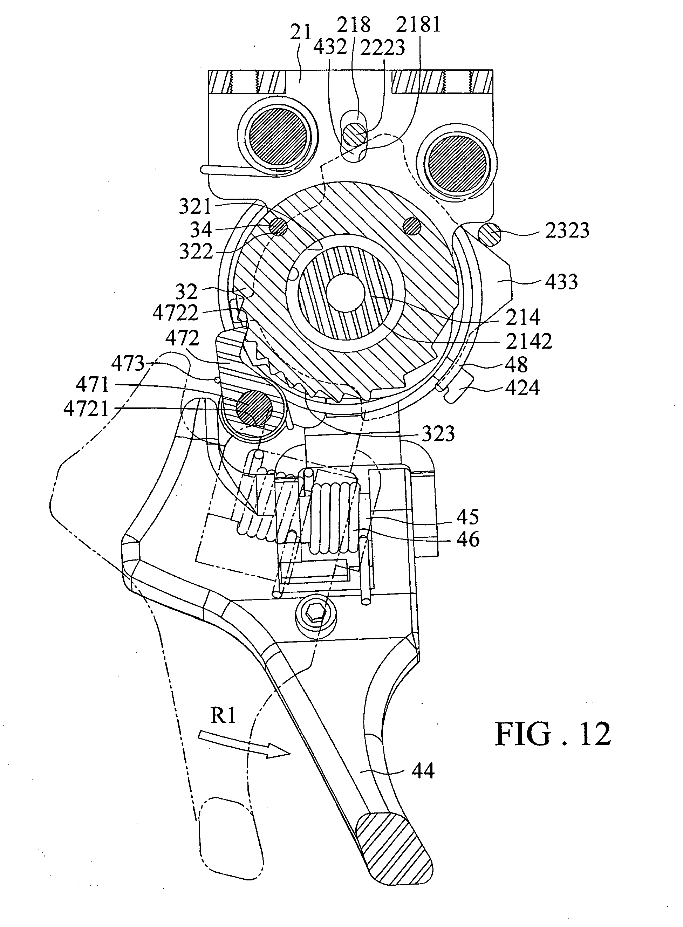

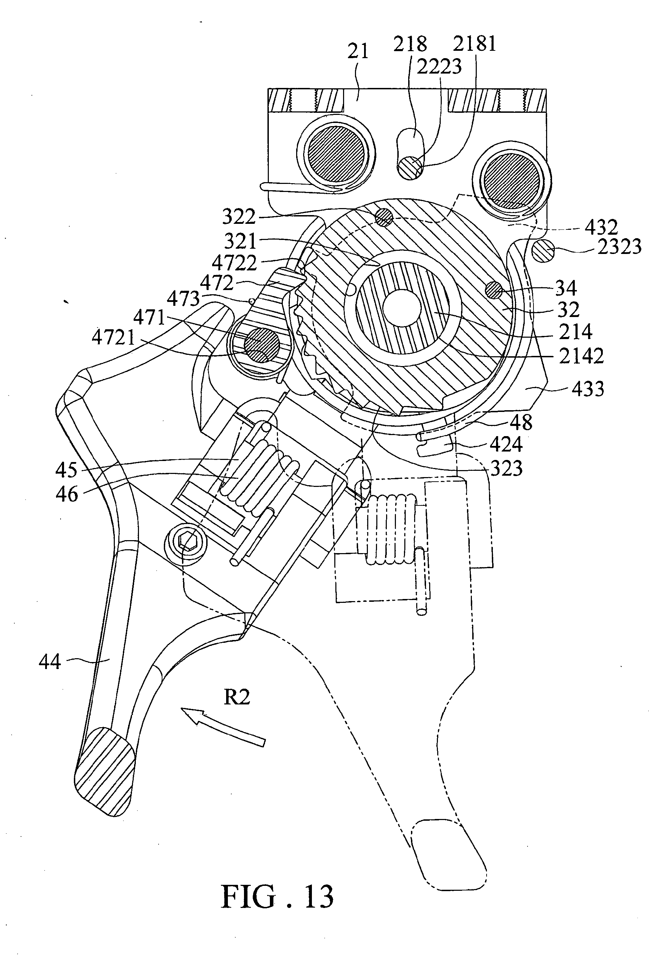

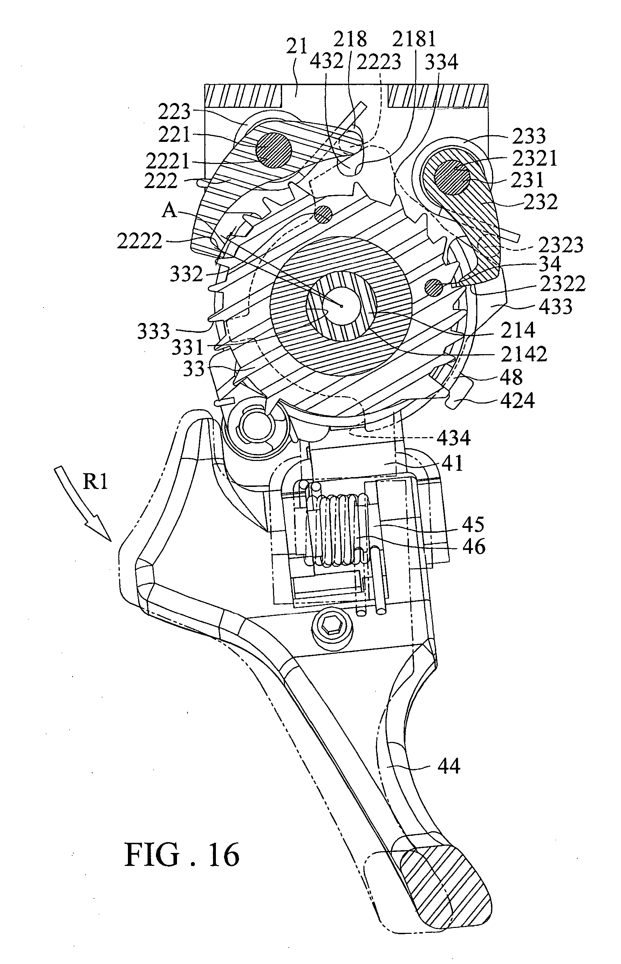

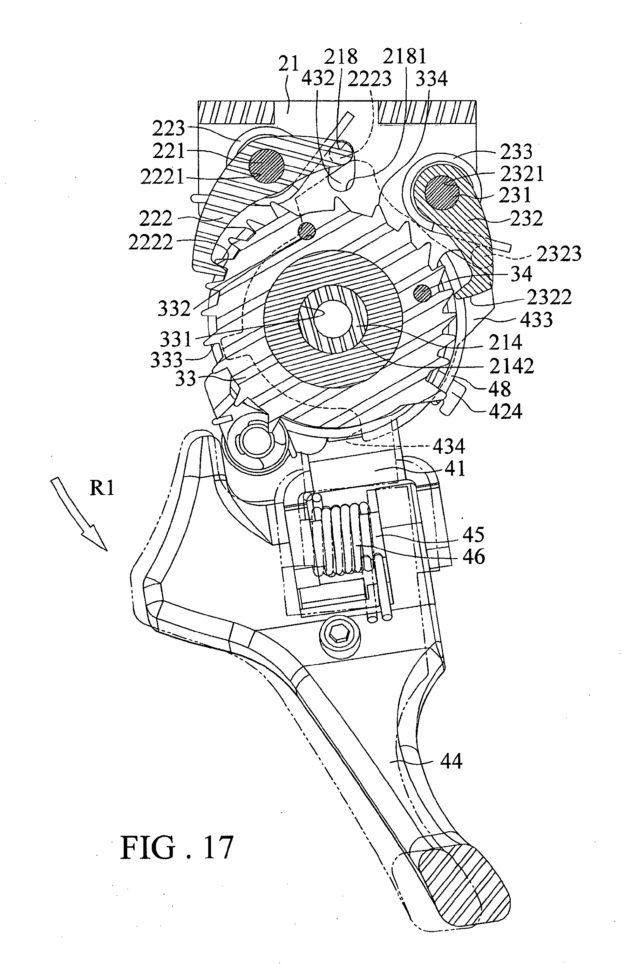

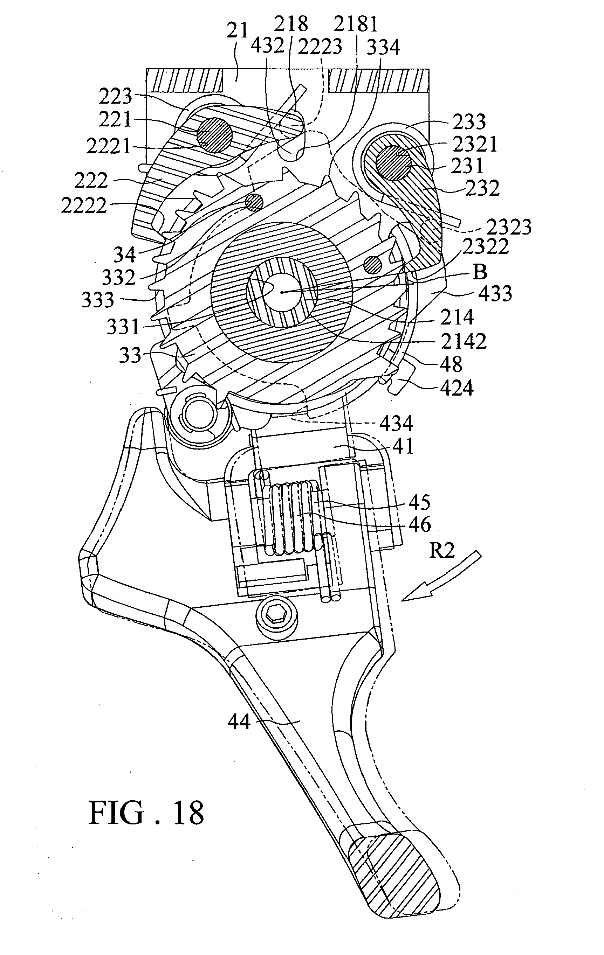

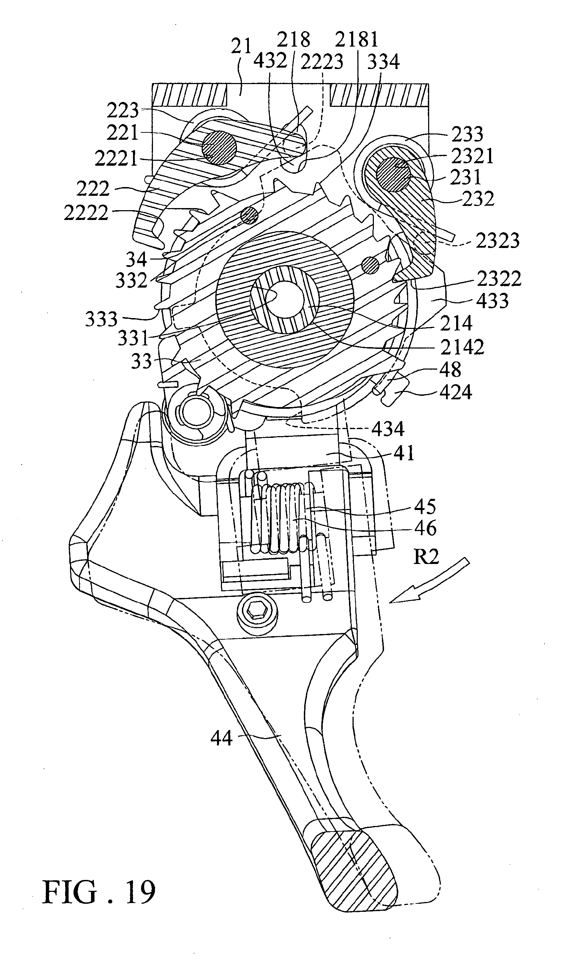

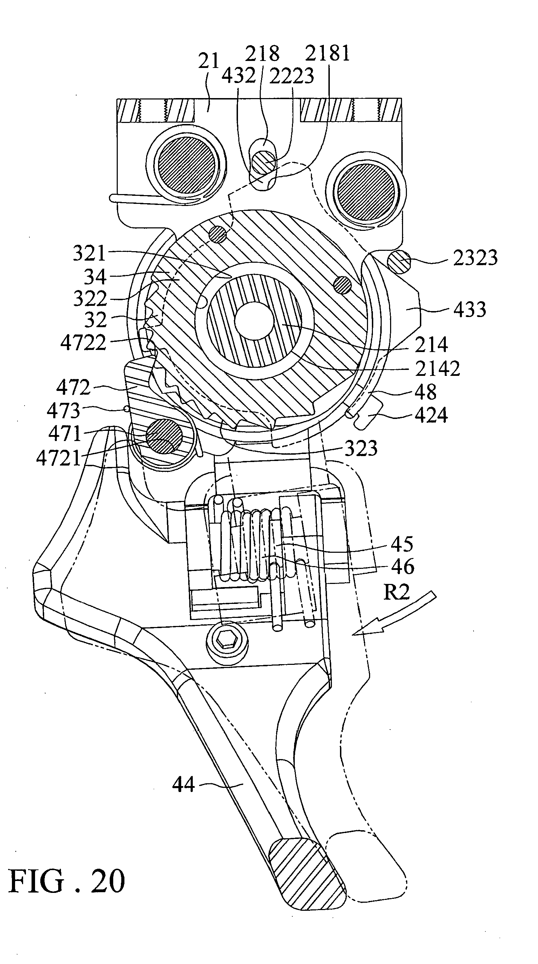

A speed control device according to the preferred teachings of the present invention is shown in Figs. 1-21 of the drawings. The speed control device is adapted to be used in connection with a speed changing device of a bicycle. According to the preferred form shown, the speed control device includes a housing 1 defining a first end 101 and a second end 102 opposite to the first end 101, and the first end 101 is adapted to connect to the bicycle. The housing 1 includes a compartment 11 in which a control assembly 2 and a brake assembly 5 are pivotally received. The control assembly 2 is retained in the compartment 11 via two fasteners 13, and the fasteners 13 are respectively inserted through two apertures 12 in the housing 11 and engage in the control assembly 2. The control assembly 2 includes a fixing member 20 installed to the housing 1, a first engaging mechanism 30 pivotally connected to the fixing member 20, and a second engaging mechanism 40 pivotally connected to the fixing member 20.

The fixing member 20 includes a body 21, a first pawl device 22 selectively engaged with the first engaging mechanism 30, and a second pawl device 23 selectively engaged with the first engaging mechanism 30. The body 21 has two fixing holes 211 corresponding to the apertures 12 of the housing 11 and inserted by the fasteners 13, respectively. The body 21 further has a first side 212 and a second side 213 opposite to and parallel to the first side 212.

The first side 212 has a first shaft 214 extending therefrom, a first connected portion 215 and a second connected portion 216 extending therethrough and adjacent to the first shaft 214. Additionally, the first shaft 214 includes a first coupling section 2141 on one end thereof distal from the first side 212, and a first rotating section 2142 defined between the first coupling section 2141 and the first side 212. The first coupling section 2141 has an outer periphery which has a non-circular cross section.

The second side 213 has a second shaft 217 extending therefrom. The second shaft 217 includes a second coupling section 2171 on one end thereof distal from the second side 213, and a second rotating section 2172 defined between the second coupling section 2171 and the second side 213. The second coupling section 2171 has an outer periphery which has a non-circular cross section.

The first pawl device 22, which is disposed to the first connected portion 215 of the body 21, includes a first rod 221 and a first pawl 222. The first rod 221 includes a proximal end installed to the first connected portion 215, and a distal end mounted by a first orifice 2221 of the first pawl 222. The second pawl device 23, which is disposed to the second connected portion 216, includes a second rod 231 and a second pawl 232. The second rod 231 includes a proximal end installed to the second connected portion 216, and a distal end of mounted by a second orifice 2321 of the second pawl 232.

The fixing member 20 includes a first retaining unit 24 installed thereto, and a second retaining unit 25 installed thereto. The first retaining unit 24 has a retaining hole 241 inserted by the first coupling section 2141 of the first shaft 214. The second retaining unit 25 has a retaining hole 251 inserted by the second coupling section 2171 of the second shaft 217. The first 241 and second 251 retaining holes have shapes conforming to the first 2141 and second 2171 engaging sections where the first 24 and second 25 retaining units are mounted. Therefore, the first 24 and second 25 retaining units are connected rigidly and prevented from rotation with respect to a longitudinal axis of related first 214 and second 217 shafts, respectively.

The first engaging mechanism 30 includes a cable-receiving member 31, a first toothed member 32 and a second toothed member 33. Additionally, the cable-receiving member 31, which is adapted to receive a shifting cable that is adapted to cause speed change upon operation of the speed control device, includes a retaining section 314 on which an end of the shifting cable is secured, and a groove 315 formed on its outer periphery and provided for preventing a length of the shifting cable which is engaged with an outer periphery of the cable-receiving member 31 from dislodging therefrom. Specifically, the cable-receiving member 31 is rotatable in a first rotation direction R1 to up-shift the speed and a second rotation direction R2 to down-shift the speed. Each of the cable-receiving member 31, first 32 and second 33 toothed members has a hole 311, 321 and 331, respectively, and the holes 331, 321 and 331, which are inserted by the first shaft 214, has a diameter not less than that of the first shaft 214. Each of the cable-receiving member 31, first 32 and second 33 toothed members further has at least one pinhole 312, 322 and 332 adjacent to related hole 331, 321 and 331, respectively, and the pinholes 312, 322 and 332 are coaxial with each other. The first engaging mechanism 30 includes at least one pin 34 and an biasing member 35. The pin 34 inserts through the pinholes 312, 322 and 332 of each of the cable-receiving member 31, first 32 and second 33 toothed members such that the cable-receiving member 31, first 32 and second 33 toothed members are rigidly connected to rotation. The biasing member 35 includes a proximal end engaging to a limiting portion 242 of the first retaining unit 24, and a distal end engaging to a limiting portion 313 of the cable-receiving member 31 of the first engaging mechanism 30. Preferably, the limiting portion 242 and 313 are in form of holes. So, if the cable-receiving member 31 is rotated in the first rotation direction R1 such that the biasing member 35 is tensioned, releasing the biasing member 35 from tension would cause the cable-receiving member 31 to rotate in the second rotation direction R2.

The first toothed member 32 includes a retaining toothed section 323 formed on its outer periphery and including a plurality of teeth, in which each tooth are asymmetric or the two sides of each tooth are not equal. Preferably, each tooth extends substantially toward the first rotation direction R1, and two adjacent teeth have a root formed thereon. The second toothed member 33 includes a first toothed section 333 corresponding to the first pawl 222, and a second toothed section 334 corresponding to the second pawl 232. Each of the first toothed section 333 and the second toothed section 334 is formed on an outer periphery of the second toothed member 33 of the first engaging mechanism 30 and includes a plurality of teeth, respectively, in which each tooth are asymmetric or the two sides of each tooth are not equal. Preferably, each tooth extends substantially toward the first rotation direction R1.

The first pawl 222 has a first engaging section 2222 formed on one end thereof, and a first abutted section 2223 formed on the other end thereof and extending toward the second face 213 of the body 21. The body 21 has an aperture 218 formed between the first 215 and second 216 connected portions, in which the first abutted section 2223 inserts through the aperture 218 and protrudes out of the body 21. The first pawl 222 is biased by a first biasing element 223. Preferably, the first biasing element 223 is a torque spring having a first leg extending therefrom and connecting to the first abutted section 2223 of the first pawl 222, and a second leg extending therefrom and connecting to the body 21 so that the first engaging section 2222 is biased to disengage from the first toothed section 333 of the second toothed member 33. The second pawl 232 has a second engaging section 2322 formed on one end thereof distal from the second orifice 2321, and a second abutted section 2323 formed between the second orifice 2321 and the second engaging section 2322 and extending toward the second face 213 of the body 21. The second abutted section 2323 protrudes out of the body 21. The second pawl 232 is biased by a second biasing element 233. Preferably, the second biasing element 233 is a torque spring having a first leg extending therefrom and connecting to the second abutted section 2323 of the second pawl 232, and a second leg extending therefrom and connecting to the body 21 so that the second engaging section 2222 is biased to engage with the second toothed section 334 of the second toothed member 33. The teeth of the first toothed section 333 have an arrangement like that of the teeth of the second toothed section 334, however, the first 333 and the second 334 toothed sections have a phase shift between them such that the first engaging section 2222 of the first pawl 222 and the second engaging section 2322 of the second pawl 232 would not engage with related tooth of each of the first 333 and second 334 toothed sections, simultaneously.

The second engaging mechanism 40 includes a catching member 41, a control plate 42 and an engagement plate 43. Each of the catching member 41, the control plate 42 and the engagement plate 43 is mounted to the second rotating section 2172 of the second shaft 217. The control plate 42 is disposed adjacent to the second side 213 of the body 21, the engagement plate 43 is disposed adjacent to the second retaining unit 25, and the catching member is disposed between the control plate 42 and the engagement plate 43. The catching member 41 has a mounting portion 411 mounted to the second rotating section 2172 of the second shaft 217, and a catching portion 412 adapted to connect to a operation lever 44 of the second engaging mechanism 40. The mounting portion 411 includes a first side 4111 adjacent to the second side 213 of the body 21, a second side 4112 opposite from the first side 4111, and a central bore 413 extending from the first side 4111 to the second side 4112. The central bore 413 is mounted to the second rotating section 2172 of the second shaft 217 such that the catching member 41 is able to rotate with respect to the second shaft 217 of the body 21. The first side 4111 of the mounting portion 411 has a first emboss 414 formed thereon and adjacent to the catching portion 412, and the first emboss 414 extends toward the second side 213 of the body 21. The second side 4112 of the mounting portion 411 has a second emboss 415 formed thereon and adjacent to the catching portion 412, and the second emboss 415 extends away from the second side 213 of the body 21. The operation lever 44 is pivotally coupled to the catching portion 412 via a fastener 45. Preferably, the fastener 45 in a form of a pin is inserted through a support hole 4121 of the catching portion 412 and a pivotal hole 441 of the operation lever so as to prevent the operation lever 44 from detaching from the catching member 41, and the operation lever 44 is pivoted from its control end 442 to pivot the catching member 41. Moreover, the operation lever 44 is biased by a biasing element 46, which is disposed between the catching member 41 and the operation lever 44.

The control plate 42 has a disk portion 421 and an arm portion 422 extending from the disk portion 421. The disk portion 421 has a hole 423 formed thereon and mounted to the second shaft 217 of the body 21 such that the engagement plate 43 is able to rotate with respect to the second shaft 217 of the body 21. The second engaging mechanism 40 further includes a clutching device 47, which is disposed to the arm portion 422 of the control plate 42 and is selectively engaged with the first engaging mechanism 30. The clutching device 47 has a rod 471, a pawl 472 and a biasing element 473. The rod 471 includes a proximal end installed to the arm portion 422 of the control plate 42, and a distal end mounted by an orifice 4721 of the pawl 472. The pawl 472 has an engaging section 4722 and a engaging surface 4723 which are formed on one end thereof, in which the engaging section 4722 and the engaging surface 4723 correspond to the toothed section 323 of the first toothed member 32 and a block 21a of the body 21, respectively. The pawl 472 is biased by a biasing element 473. Preferably, the biasing element 473 is a torque spring and includes a plurality of coaxially disposed coiled sections inserted by the rod 471 and a first leg extending therefrom and engaging to the control plate 42, and a second leg extending therefrom and connecting to the pawl 472 where between the orifice 4721 and the engaging section 4722 so that the engaging section 2222 is biased to engage with the toothed section 323 of the first toothed member 32. The arm portion 422 has an abutted surface 4221 corresponding to the first emboss 414 of the catching member 41.

The second engaging mechanism 40 includes an biasing member 48 which includes a proximal end engaging to a limiting portion 219 of the body 21, and a distal end engaging to a hook 424 of the control plate 42 so that the abutted surface 4221 of the engagement member 42 is biased to abut against the first emboss 414 of the catching member 41. Preferably, the limiting portion 219 is in form of a hole. So, if the control plate 42 is rotated in the second rotation direction R2 such that the biasing member 48 is tensioned, releasing the biasing member 48 from tension would cause the control plate 42 to rotate in the first rotation direction R1.

The engagement plate 43 includes a hole 431, which extends therethrough and is mounted to the second rotating section 2172 of the second shaft 217, an abutted surface 434 corresponding to the second emboss 415 of the catching member 41, and a first protrusion 432 and a second protrusion 433, which protrude from an outer periphery thereof. The first 432 and second 433 protrusions correspond to the first abutted section 2223 of the first pawl device 22 and the second abutted section 2323 of the second pawl device 23, respectively. The first protrusion 432 has a first portion 4321 distal from the second protrusion 433 and a second portion 4322 adjacent to the second protrusion 433. Moreover, the first portion 4321 and a center of the hole 431 has a distance therebetween smaller than that between the second portion 4322 and the center of the hole 431. The second protrusion 433 has a first portion 4331 adjacent to the first protrusion 432 and a second portion 4332 distal from the second protrusion 432. Moreover, the first portion 4331 and the center of hole 431 has a distance therebetween smaller than that between the second portion 4332 and the center of the hole 431.

The second engaging mechanism 40 includes an biasing member 49 which includes a proximal end engaging to a limiting portion 252 of the second retaining unit 25, and a distal end engaging to a limiting portion 435 of the engagement plate 43 so that the abutted surface 434 of the engagement plate 43 is biased to abut against the second emboss 415 of the catching member 41. Preferably, the limiting portions 252 and 435 is in form of a hole. So, if the engagement plate 43 is rotated in the first rotation direction R1 such that the biasing member 49 is tensioned, releasing the biasing member 49 from tension would cause the engagement plate 43 to rotate in the second rotation direction R2.

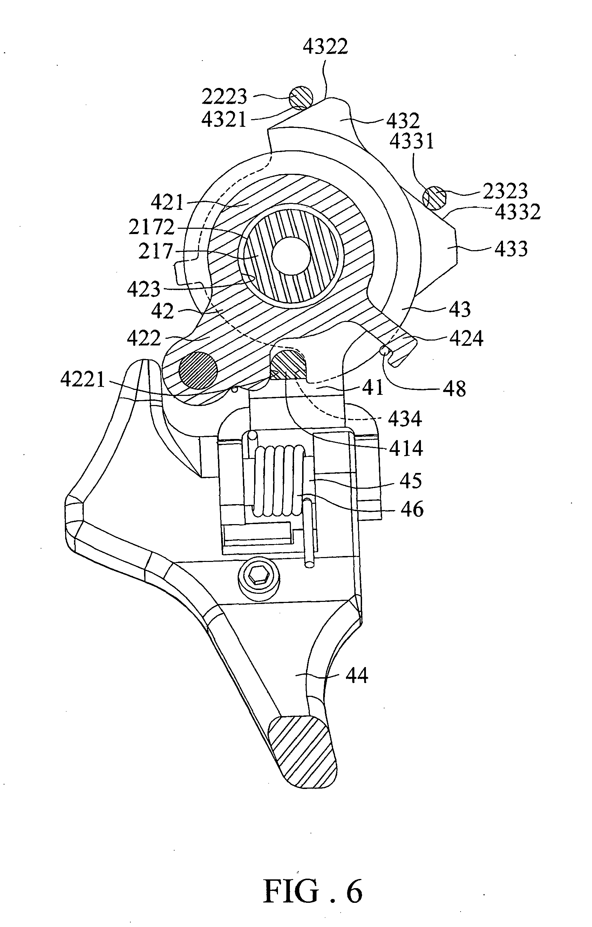

Particularly, while the operation lever 44 is not operated by a user, the catching member 41 is in a rest position as shown in Figs. 6 through 8, i.e., the first abutted section 2223 of the first pawl 222 is abutted by the first portion 4321 of the first protrusion 432 such that the first engaging section 2222 of the first pawl 222 is disengaged from the first toothed section 333 of the second toothed member 33, and the second abutted section 2323 of the second pawl 232 is abutted by the first portion 4331 of the second protrusion 433 such that the second engaging section 2322 of the second pawl 232 is engaged with related tooth of the second toothed section 334 of the second toothed member 33. The second pawl 232 is engaged with the second toothed section 334 of the second toothed member 33 so that the first engaging mechanism 30 would not rotate with respect to the first shaft 214 of the body 21 in the first rotation direction R1. Moreover, the first engaging mechanism 30 is engaged with the biasing member 35 so that the first engaging mechanism 30 would not rotate with respect to the first shaft 214 of the body 21 in the second rotation direction R2 via an elastic force of the biasing member 35. Therefore, the control assembly would not up-shift or down-shift the speed while the catching member is in the rest position.

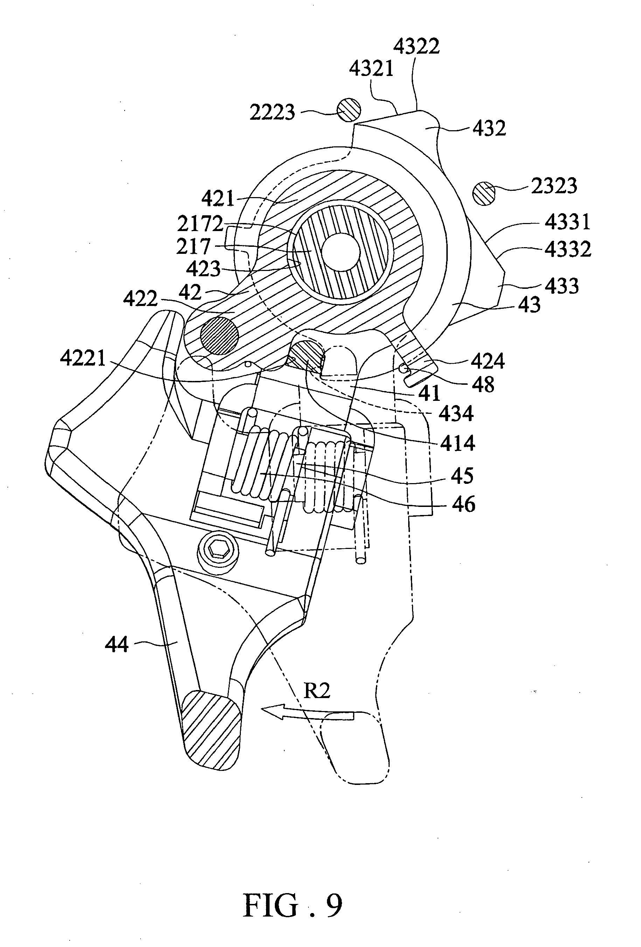

The speed control device 100 has two operation modes. In one operation mode, i.e. the cable-winding operation as shown in Figs. 9 through 17, the operation lever 44 of the second engaging mechanism 40 is pivoted from its control end 442, but not necessary, in the second rotation direction R2 to pivot the catching member 41 to abuts against the control plate 42 via the first emboss 414 and then cause rotation of the control plate 42, and as the control plate 42 is rotated the first engaging mechanism 30 is rotated concurrently due to that the engaging section 4722 of the pawl 472 of the clutch device 47 is engaged with the toothed section 323 of the first toothed member 32. The engagement plate 43 is rotated via the second emboss 415, and as the engagement plate 43 is rotated, the first abutted section 2223 disengages from the first protrusion 432 of the engagement plate 43 and engages with a holding surface 2181 of the aperture 218, in which the holding surface 2181 of the aperture 218 and the center of the hole 431 smaller than that of the first portion 4321 of the first protrusion 432 so that the first engaging section 2222 and the first toothed section 333 has a gap to prevent the second toothed member 33 from interfering with respect to the first engaging section 2222. In addition, the second engaging section 2322 of the second pawl 232 is shifted from a beginning position in which the second engaging section 2322 is engaged with a tooth of the second toothed section 334 to a first position in which the second engaging section 2322 is engaged with the next tooth if one speed change is to be made. The first engaging mechanism 30 is abutted by the second pawl 232 and the biasing member 35, respectively, so that the first engaging member 30 is prevented from rotating with respect to the first shaft 214.

And next, the operation lever 44 is returned to its home position, i.e. an initial position where the operation lever 44 is positioned before commencing this cable-winding operation (as shown in Fig. 6). The control plate 42 is rotated in the first rotation direction R1 by the biasing member 48, and the abutted surface 4221 abuts the first emboss 414 of the catching member 41 to rotate the catching member 41 in the first rotation direction R1 such that the engaging section 4722 of the pawl is shifted from a beginning position in which the engaging section 4722 is engaged with a root in the toothed section 323 of the first toothed member 32 to a first engaging position in which engaging section 4722 is engaged with the next root. The second emboss 415 of the catching member 41 abuts the abutted surface 434 of the engagement plate 43 such that the engagement plate 43 is rotated in the first rotation direction R1 until the operation lever 44 is returned to its home position. The first portion 4321 of the first protrusion 432 abuts the first abutted section 2223 of the first pawl 222 and the first portion 4331 of the second protrusion 433 abuts the second abutted section 2323 of the second pawl 232 while the operation lever 44 is in its home position.

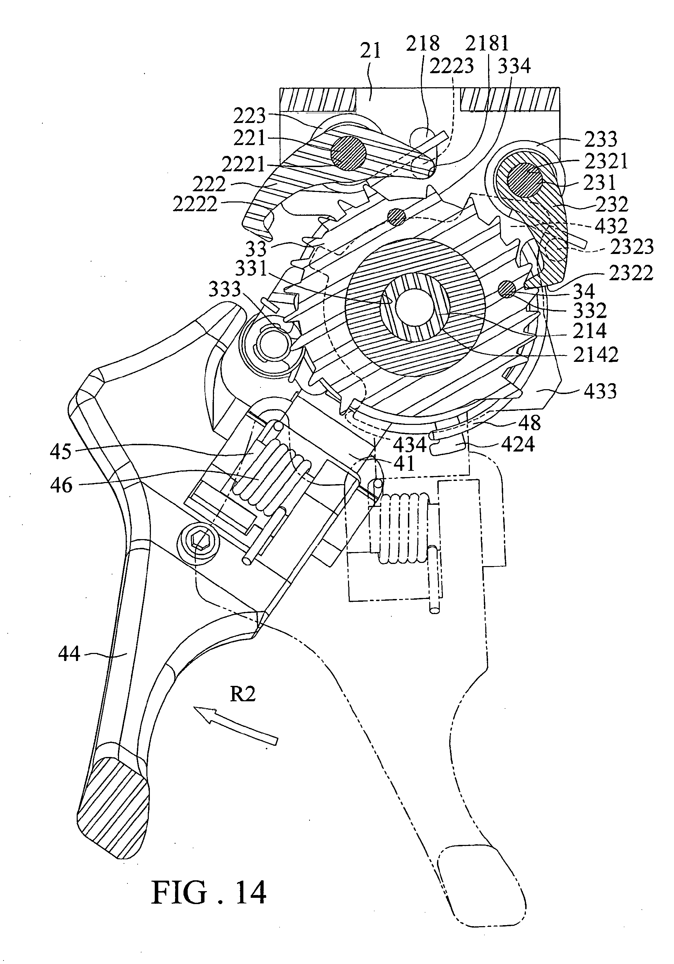

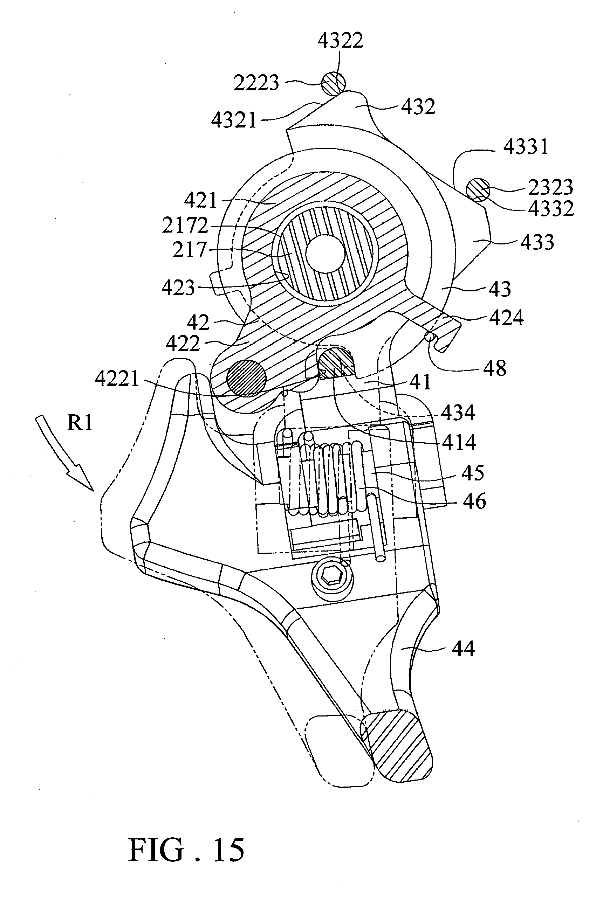

Additionally, the control assembly 2 is adapted to effect multiple speed change in one stroke of the operation lever 44 of the second engaging mechanism 40. The body 21 has a retaining surface 21b formed thereon and adjacent to the block 21a. The operation lever 44 is able to be pivoted in the second rotation direction R2 from the home position to a maximum pivotal position that the engaging section 4722 of the pawl 472 abuts the retaining surface 21 b of the body 21 to prevent the second engaging mechanism 40 from further rotating in the second rotation direction R2. Figs. 14 and 15 show that the operation lever 44 is pivoted to the maximum pivotal position in the second rotation direction R2 to pivot the catching member 41 to abutted against the control plate 42 via the first emboss 414 and then cause rotation of the control plate 42, and as the control plate 42 is rotated the first engaging mechanism 30 is rotated concurrently due to that the pawl 472 of the clutch device 47 is engaged with the toothed section 323 of the first toothed member 32. Preferably, the control assembly 2 is able to effect three speed change in one stroke of the operation lever 44 while the operation lever 44 is pivoted to the maximum pivotal position in which the second engaging section 2322 of the second pawl 232 is shifted from the beginning position to a second position in which the second engaging section 2322 skip across three teeth and is engaged with the last teeth if three speed change is to be made. The first engaging mechanism 30 is abutted by the second pawl 232 and the biasing member 35, respectively, so that the first engaging member 30 is prevented from rotating with respect to the first shaft 214.

And next, the operation lever 44 is returned to its home position, the control plate 42 is rotated in the first rotation direction R1 by the biasing member 48, and the abutted surface 4221 abuts the first emboss 414 of the catching member 41 to rotate the catching member 41 in the first rotation direction R1 such that the engaging section 4722 of the pawl is shifted from a beginning position to a second engaging position in which engaging section 4722 skip across three roots and is engaged with the last root. The second emboss 415 of the catching member 41 abuts the abutted surface 434 of the engagement plate 43 such that the engagement plate 43 is rotated in the first rotation direction R1 until the operation lever 44 is returned to its home position.

In another operation mode, i.e. the cable-releasing operation, as shown in Figs. 15 through 20, the operation lever 44 of the second engaging mechanism 40 is pivoted in the first rotation direction R1 for the cable-winding operation and is then released to accomplish the cable-releasing. Specifically, the operation lever 44 is pivoted from its control end 442 in the first rotation direction R1 to pivot the catching member 41 to abut against the engagement plate 43 via the second emboss 415 and then cause rotation of the engagement plate 43. The control plate 42 is rotated in the first rotation direction R1 by the biasing member 48, and the engaging surface 4723 of the pawl 472 is abutted by the block 21a of the body 21 so that the engaging section 4722 of the pawl 472 is disengaged from the toothed section 323 of the first toothed member 32. As the engagement plate 43 is rotated, the first protrusion 432 of the engagement plate 43 slides with respect to the first abutted section 2223 until the first abutted section 2223 engages with the second portion 4322 of the first protrusion 432, and the second protrusion 433 of the engagement plate 43 slides with respect to the second abutted section 2323 until the second abutted section 2323 engages with the second portion 4332 of the second protrusion 433. The second engaging section 2322 is disengaged from the second toothed section 334 of the second toothed member 33 while the second abutted section 2323 engages with the second portion 4322 of the first protrusion 432, in addition, the first engaging section 2222 is engaged with a corresponding tooth of the first toothed section 333 of the second toothed member 33 while the first abutted section 2223 engages with the second portion 4322 of the first protrusion 432. Moreover, because the first 333 and the second 334 toothed sections have a phase shift therebetween, once the second engaging section 2322 is disengaged from the second toothed section 334 of the second toothed member 33, the first engaging section 2222 is engaged with the corresponding tooth of the first toothed section 333 of the second toothed member 33 immediately, and the second toothed member 33 is rotated with a first angular step A in the first rotation direction R1 via the biasing member 35, simultaneously, and then the second engaging section 2322 corresponds to a next tooth of the second toothed section 334 of the second toothed member 33.

And next, the operation lever 44 is returned to its home position, the engagement plate 43 is rotated in the second rotation direction R2 by the biasing member 49, and the abutted surface 434 abuts the second emboss 415 of the catching member 41 to rotate the catching member 41 in the second rotation direction R2 such that the first protrusion 432 of the engagement plate 43 slides with respect to the first abutted section 2223 until the first abutted section 2223 engages with the first portion 4321 of the first protrusion 432, and the second protrusion 433 of the engagement plate 43 slides with respect to the second abutted section 2323 until the second abutted section 2323 engages with the first portion 4331 of the second protrusion 433. The first engaging section 2222 is disengaged from the corresponding tooth of the first toothed section 333 of the second toothed member 33 while the first abutted section 2223 engages with the first portion 4321 of the first protrusion 432, in addition, the second engaging section 2322 is engaged with the next tooth of the second toothed section 334 of the second toothed member 33 while the second abutted section 2323 engages with the first portion 4322 of the first protrusion 432. Moreover, because the first 333 and the second 334 toothed sections have a phase shift therebetween, once the first engaging section 2222 is disengaged from the corresponding tooth of the first toothed section 333 of the second toothed member 33, the second engaging section 2322 is engaged with the next tooth of the second toothed section 334 of the second toothed member 33 immediately, and the second toothed member 33 is rotated with a second angular step B in the first rotation direction R1 via the biasing member 35, simultaneously, and then the first engaging section 2222 corresponds to a next tooth of the first toothed section 333 of the second toothed member 33 if one speed change is to be made. As the catching member 41 rotates in the second rotation direction R2, the control plate 42 is rotated in the second rotation direction R2 due to that the abutted surface 4221 is abutted by the first emboss 414 of the catching member 41 until the operation lever is back to the home position, such that the engaging section 4722 of the pawl 472 is engaged to a corresponding tooth of the toothed section 323 of the first toothed member 32.

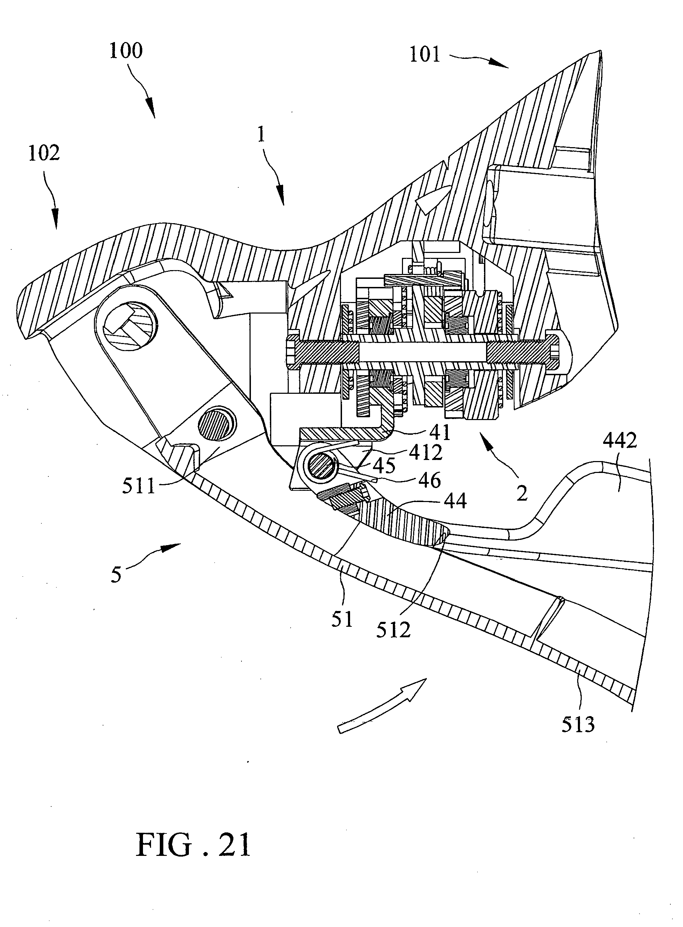

The operation lever 44 is biased by the biasing element 46 as shown in Fig. 21. Preferably, the biasing element 46 is a torque spring and includes a plurality of coaxially disposed coiled sections inserted by the fastener 45 and a first leg extending therefrom and engaging to the catching portion 412 of the catching member 41, and a second leg extending therefrom and connecting to the operation lever 44 so that the control end 442 is biased to be close to the brake assembly 5. The brake assembly 5 comprises a brake lever 51 including a pivotal portion 511 formed on one end thereof, a stop wall 512 corresponding to the operation lever 44, and a control end 513 formed on the other end thereof. The pivotal portion 511 is pivotally connected to the housing 1, and the control end 513 can be operated to pivot the brake lever 51, but not necessary. As the control end 513 of the brake lever 51 is pivoted toward the first end 101 of the housing 1, the control end 442 of the operation lever 44 is abutted to be biased to the first end 101 of the housing 1 by the stop wall 512 of the brake lever 51. As the control end of the brake lever 51 is pivoted to return to an initial position (not shown), the operation lever 44 is pivoted to its initial position by the biasing element 46 so that the operation lever 44 would not interfere with respect to the brake lever 51.

## Claims

1. A speed control device (100) for a speed changing device of a bicycle is operable between a cable-winding operation mode and a cable-releasing operation mode, comprising:
a control assembly (2) including a fixing member (20), a first engaging mechanism (30) pivotally connected to the fixing member (20), and a second engaging mechanism (40) pivotally connected to the fixing member (20);
wherein the fixing member (20) includes a body (21), a first pawl device (22) selectively engaged with the first engaging mechanism (30), and a second pawl device (23) selectively engaged with the first engaging mechanism (30), with the fixing member (20) having a first connected portion (215) where the first pawl device (22) is disposed to, and a second connected portion (216) where the second pawl device (23) is disposed to;
wherein the first engaging mechanism (30) includes a cable-receiving member (31) rotatable in a first rotation direction (R1) to up-shift the speed and a second rotation direction (R2) to down-shift the speed;
wherein the second engaging mechanism (40) includes a control plate (42), an engagement plate (43), and a clutching device (47), with the control plate (42) having an arm portion (422), with the clutching device (47) disposed to the arm portion (422) of the control plate (42) and selectively engaged with the first engaging mechanism (30), wherein the engagement plate (43) includes a first protrusion (432) and a second protrusion (433), which protrude from an outer periphery thereof, with the first (432) and second (433) protrusions correspond to the first pawl device (22) and the second pawl device (23), respectively; and
wherein the control assembly (2) is adapted to effect multiple speed change in one stroke of the second engaging mechanism (40), **characterized in that**
the second engaging mechanism (40) includes a catching member (41) having a first emboss (414) formed thereon, an operation lever (44) pivotably coupled to the catching member (41), and a biasing element (46) disposed between the catching member (41) and the operation lever (44), with the operation lever (44) is biased by the biasing element (46), wherein the control plate (42) includes an abutted surface (4221) corresponding to the first emboss (414) of the catching member (41), wherein as the catching member (41) rotates in the second rotation direction (R2), the control plate (42) is rotated in the second rotation direction (R2) due to that the abutted surface (4221) is abutted by the first emboss (414) of the catching member (41),
and **in that** the catching member (41) has a second emboss (415) formed thereon, wherein the engagement plate (43) includes an abutted surface (434) corresponding to the second emboss (415) of the catching member (41), wherein as the catching member (41) rotates in the first rotation direction (R1), the engagement plate (43) is rotated in the first rotation direction (R1) due to that the abutted surface (434) is abutted by the second emboss (425) of the catching member (41).

2. The speed control device (100) as claimed in claim 1, wherein the first pawl device (22) includes a first engaging section (2222) and a first abutted section (2223) abutted by the first protrusion (432), and the second pawl device (23) includes a second engaging section (2322) and a second abutted section (2323) abutted by the second protrusion (433), wherein the first engaging mechanism (30) includes a first toothed section (333) corresponding to the first engaging section (2222), and a second toothed section (334) corresponding to the second engaging section (2322), wherein while the second engaging mechanism (40) is not operated by a user, the first engaging section (2222) is disengaged from the first toothed section (333), and the second engaging section (2322) is engaged with the second toothed section (334).

3. The speed control device (100) as claimed in claim 2, wherein the engagement plate (43) includes a hole (431) extending therethrough, wherein the first protrusion (432) has a first portion (4321) and a second portion (4322), wherein the first portion (4321) and a center of the hole (431) has a distance therebetween smaller than that between the second portion (4322) and the center of the hole (431), wherein while the first abutted section (2223) of the first pawl device (22) is abutted by the first portion (4321) of the first protrusion (432), the first engaging section (2222) of the first pawl device (22) is disengaged from the first toothed section (333), wherein while the first abutted section (2223) of the first pawl device (22) is abutted by the second portion (4322) of the first protrusion (432), the first engaging section (2222) of the first pawl device (22) is engaged with the first toothed section (333).

4. The speed control device (100) as claimed in claim 2, wherein the engagement plate (43) includes a hole (431) extending therethrough, wherein the second protrusion (433) has a first portion (4331) and a second portion (4332), wherein the first portion (4331) and a center of the hole (431) has a distance therebetween smaller than that between the second portion (4332) and the center of the hole (431), wherein while the second abutted section (2323) of the second pawl device (23) is abutted by the first portion (4331) of the second protrusion (433), the second engaging section (2322) of the second pawl device (23) is engaged with the second toothed section (334), wherein while the second abutted section (2323) of the second pawl device (23) is abutted by the second portion (4332) of the second protrusion (433), the second engaging section (2322) of the second pawl device (23) is disengaged from the second toothed section (334).

5. The speed control device (100) as claimed in claim 2, wherein each of the first toothed section (333) and the second toothed section (334) is formed on an outer periphery of the first engaging mechanism (30) and includes a plurality of teeth, respectively, in which each tooth is asymmetric, wherein a plurality teeth of the first toothed section (333) has an arrangement like that of a plurality teeth of the second toothed section (334), wherein the first (333) and the second (334) toothed sections have a phase shift therebetween.

6. The speed control device (100) as claimed in claim 2, wherein the first engaging mechanism (30) includes a retaining toothed section (323) formed on its outer periphery and including a plurality of teeth, wherein the clutching device (472) has an engaging section (4722) formed on one end thereof, wherein while the second engaging mechanism 40 is pivoted in the second direction, the first engaging mechanism (30) is rotated concurrently due to that the engaging section (4722) is engaged with the toothed section (323) to effect speed change.

7. The speed control device (100) as claimed in claim 6, wherein the toothed section (323) is formed on an outer periphery of the first engaging mechanism (30) and includes a plurality of teeth, respectively, in which each tooth is asymmetric, wherein the clutching device (47) has a engaging surface (4723) formed on one end thereof, wherein the engaging surface (4723) corresponds to a block (21a) of the body (21), wherein while the second engaging mechanism (40) is pivoted in the first rotation direction (R1) for the cable-winding operation, the engaging surface (4723) is abutted by the block (21 a) of the body (21) so that the engaging section (4722) of the clutching device (47) is disengaged from the toothed section (323) of the first toothed member (32).

8. The speed control device (100) as claimed in claim 6, wherein the body (21) has a retaining surface (21b) formed thereon, wherein while the second engaging mechanism (40) is pivoted in the second rotation direction (R2) to a maximum pivotal position, the engaging section (4722) of the pawl device (47) abuts the retaining surface (21 b) of the body (21) to prevent the second engaging mechanism (40) from further rotating in the second rotation direction (R2).

9. The speed control device (100) as claimed in claim 1, wherein the first engaging mechanism (30) includes a first toothed section (333), wherein the first pawl device (22) includes a first pawl (222) and a first biasing element (223),wherein the first pawl (222) has a first engaging section (2222) formed on one end thereof, and a first abutted section (2223) formed on the other end thereof, wherein the first biasing element (223) includes a first leg extending therefrom and connecting to the first abutted section (2223) of the first pawl (222), and a second leg extending therefrom and connecting to the body (21) so that the first engaging section (2222) is biased to disengage from the first toothed section (333).

10. The speed control device (100) as claimed in claim 1, wherein the first engaging mechanism (30) includes a second toothed section (334), wherein the second pawl device (23) includes a second pawl (232) and a second biasing element (233),wherein the second pawl (232) has a second engaging section (2322) formed on one end thereof, and a second abutted section (2323) formed on the other end thereof, wherein the second biasing element (233) includes a first leg extending therefrom and connecting to the second abutted section (2323) of the second pawl (232), and a second leg extending therefrom and connecting to the body (21) so that the second engaging section (2322) is biased to engage with the second toothed section (334).

11. The speed control device (100) as claimed in claim 1, wherein the fixing member (20) includes a first retaining unit (24) installed thereto, wherein the first engaging mechanism (30) includes an biasing member (35) including a proximal end engaging to a limiting portion (242) of the first retaining unit (24), and a distal end engaging to the first engaging mechanism (30), wherein the fixing member (20) includes a second retaining unit (25) installed thereto, wherein the second engaging mechanism (40) includes an biasing member (49) including a proximal end engaging to a limiting portion (252) of the second retaining unit (25), and a distal end engaging to the engagement plate (43).

12. The speed control device (100) as claimed in claim 1, wherein the second engaging mechanism (40) includes an biasing member (48) which includes a proximal end engaging to a limiting portion (219) of the body (21), and a distal end engaging to the control plate (42).

13. The speed control device (100) as claimed in claim 2, wherein the engagement plate (43) includes a hole (431) extending therethrough, wherein the body (21) includes a holding surface (2181), wherein the holding surface (2181) and a center of the hole (431) has a distance therebetween smaller than that of the first protrusion (432) and the center of the hole (431), wherein as the catching member (41) rotates in the second rotation direction (R2), the engagement plate (43) is rotated in the second rotation direction (R2) due to that the abutted surface (434) of the engagement plate (43) is abutted by the second emboss (425) of the catching member (41), and the first abutted section (2223) is disengaged from the first protrusion (432) to engage the holding surface (2181) of the body (21).

## Patentansprüche

1. Geschwindigkeitskontrollvorrichtung (100) für eine Geschwindigkeitsänderungsvorrichtung eines Fahrrads, die zwischen einem Kabelaufwickelbetriebsmodus und einem Kabellösungsbetriebsmodus umstellbar ist und die umfasst:
eine Kontrollanordnung (2), die ein Fixierelement (20), einen ersten Eingriffsmechanismus (30), der drehbar mit dem Fixierelement (20) verbunden ist, und einen zweiten Eingriffsmechanismus (40) umfasst, der drehbar mit dem Fixierelement (20) verbunden ist;
wobei das Fixierelement (20) einen Körper (21), eine erste Klauenvorrichtung (22), die selektiv mit dem ersten Eingriffsmechanismus (30) im Eingriff ist, und eine zweite Klauenvorrichtung (23) umfasst, die selektiv mit dem ersten Eingriffsmechanismus (30) im Eingriff ist, wobei das Fixierelement (20) einen ersten Verbindungsbereich (215), an dem die erste Klauenvorrichtung (22) angeordnet ist, und einen zweiten Verbindungsbereich (216) aufweist, an dem die zweite Klauenvorrichtung (23) angeordnet ist;
wobei der erste Eingriffsmechanismus (30) ein Kabelaufnahmeelement (31) aufweist, das in einer ersten Rotationsrichtung (R1) zum Hinaufschalten der Geschwindigkeit und in einer zweiten Rotationsrichtung (R2) zum Herunterschalten der Geschwindigkeit drehbar ist;
wobei der zweite Eingriffsmechanismus (40) eine Kontrollplatte (42), eine Eingriffsplatte (43) und eine Kupplungsvorrichtung (47) umfasst, wobei die Kontrollplatte (42) einen Armbereich (422) aufweist, wobei die Kupplungsvorrichtung (47) an dem Armbereich (422) der Kontrollplatte (42) angeordnet ist und selektiv mit dem ersten Eingriffsmechanismus (30) im Eingriff ist, wobei die Eingriffsplatte (43) einen ersten Vorsprung (432) und einen zweiten Vorsprung (433) umfasst, die von derem äußeren Rand hervorstehen, wobei der erste (432) und der zweite (433) Vorsprung jeweils der ersten Klauenvorrichtung (22) beziehungsweise der zweiten Klauenvorrichtung (23) entsprechen; und
wobei die Kontrollvorrichtung (2) darauf ausgelegt ist, mehrere Geschwindigkeitsänderungen mit einer Betätigung des zweiten Eingriffsmechanismus (40) auszuführen, **dadurch gekennzeichnet, dass**
der zweite Eingriffsmechanismus (40) ein Fangelement (41) umfasst, das eine erste darauf ausgebildete Auswölbung (414), einen Betätigungshebel (44), der drehbar an dem Fangelement (41) angekoppelt ist, und ein Vorspannelement (46) aufweist, das zwischen dem Fangelement (41) und dem Betätigungshebel (44) angeordnet ist, wobei der Betatigungshebel (44) durch das Vorspannelement (46) vorgespannt ist, wobei die Kontrollplatte (42) eine anliegende Oberfläche (4221) umfasst, die der ersten Auswölbung (414) des Fangelements (41) entspricht, wobei die Kontrollplatte (42), wenn sich das Fangelement (41) in die zweite Rotationsrichtung (D2) dreht, aufgrund dessen, dass die erste Auswölbung (414) des Fangelements (41) an der anliegenden Oberfläche (4221) anliegt, in die zweite Rotationsrichtung (R2) gedreht wird,
und dass das Fangelement (41) eine zweite darauf ausgebildete Auswölbung (415) aufweist, wobei die Eingriffsplatte (43) eine anliegende Oberfläche (434) umfasst, die der zweiten Auswölbung (415) des Fangelements (41) entspricht,
wobei die Eingriffsplatte (43), wenn sich das Fangelement (41) in die erste Rotationsrichtung (R1) dreht, aufgrund dessen, dass die zweite Auswölbung (415) des Fangelements (41) an der anliegenden Oberfläche (434) anliegt, in die erste Rotationsrichtung (R1) gedreht wird.

2. Geschwindigkeitskontrollvorrichtung (100) nach Anspruch 1, bei der die erste Klauenvorrichtung (22) einen ersten Eingriffsbereich (2222) und einen ersten anliegenden Bereich (2223) umfasst, an dem der erste Vorsprung (432) anliegt, und wobei die zweite Klauenvorrichtung (23) einen zweiten Eingriffsbereich (2322) und einen zweiten anliegenden Bereich (2323) umfasst, an dem der zweite Vorsprung (433) anliegt, wobei der erste Eingriffsmechanismus (30) einen ersten gezahnten Bereich (333), der dem ersten Eingriffsbereich (2222) entspricht, und einen zweiten gezahnten Bereich (334) umfasst, der dem zweiten Eingriffsbereich (2322) entspricht, wobei der erste Eingriffsbereich (2223), wenn der zweite Eingriffsmechanismus (40) durch einen Benutzer nicht geöffnet ist, von dem ersten gezahnten Bereich (333) getrennt ist und der zweite Eingriffsbereich (2322) mit dem zweiten gezahnten Bereich (334) im Eingriff ist.

3. Geschwindigkeitskontrollvorrichtung (100) nach Anspruch 2, bei der die Eingriffsplatte (43) ein Loch (431), das sich durch dieses hindurch erstreckt, umfasst, wobei der erste Vorsprung (432) einen ersten Bereich (4321) und einen zweiten Bereich (4322) aufweist, wobei der erste Bereich (4321) und eine Mitte des Lochs (431) eine dazwischen liegende Distanz kleiner als die aufweisen, die zwischen dem zweiten Bereich (4322) und der Mitte des Lochs (431) ist, wobei der erste Eingriffsbereich (2222) der ersten Klauenvorrichtung (22), wenn der erste Bereich (4321) des ersten Vorsprungs (432) an dem ersten anliegenden Bereich (2223) der ersten Klauenvorrichtung (22) anliegt, von dem ersten gezahnten Bereich (333) getrennt ist, und wobei der erste Eingriffsbereich (2222) der ersten Klauenvorrichtung (22), wenn der zweite Bereich (4322) des ersten Vorsprungs (432) an dem ersten anliegenden Bereich (2223) der ersten Klauenvorrichtung (22) anliegt, mit dem ersten gezahnten Bereich (333) im Eingriff ist.

4. Geschwindigkeitskontrollvorrichtung (100) nach Anspruch 2, wobei die Eingriffsplatte (43) ein Loch (431), das sich durch dieses hindurch erstreckt, umfasst, wobei der zweite Vorsprung (433) einen ersten Bereich (4331) und einen zweiten Bereich (4332) aufweist, wobei der erste Bereich (4331) und eine Mitte des Lochs (431) eine dazwischen liegende Distanz kleiner als die aufweisen, die zwischen dem zweiten Bereich (4332) und der Mitte des Lochs (431) ist, wobei der zweite Eingriffsbereich (2322) der zweiten Klauenvorrichtung (23), wenn der erste Bereich (4331) des zweiten Vorsprungs (433) an dem zweiten anliegenden Bereich (2323) der zweiten Klauenvorrichtung (23) anliegt, mit dem zweiten gezahnten Bereich (334) im Eingriff ist, und wobei der zweite Eingriffsbereich (2322) der zweiten Klauenvorrichtung (23), wenn der zweite Bereich (4332) des zweiten Vorsprungs (433) an dem zweiten anliegenden Bereich (2323) der zweiten Klauenvorrichtung (23) anliegt, von dem zweiten gezahnten Bereich (334) getrennt ist.

5. Geschwindigkeitskontrollvorrichtung (100) nach Anspruch 2, bei der sowohl der erste gezahnte Bereich (333) als auch der zweite gezahnte Bereich (334) an einem äußeren Umfang des ersten Eingriffsmechanismus (30) ausgebildet sind und eine Vielzahl von Zähnen umfassen, wobei jeder Zahn asymmetrisch ist, wobei eine Vielzahl Zähne des ersten gezahnten Bereichs (333) eine Anordnung wie die einer Vielzahl Zähne des zweiten gezahnten Bereichs (334) aufweist, und wobei der erste (333) und der zweite (334) gezahnte Bereich eine Phasenverschiebung zwischen sich aufweisen.

6. Geschwindigkeitskontrollvorrichtung (100) nach Anspruch 2, wobei der erste Eingriffsmechanismus (30) einen gezahnten Rückhaltebereich (323) umfasst, der an seinem äußeren Umfang ausgebildet ist und eine Vielzahl von Zähnen umfasst, wobei die Kupplungsvorrichtung (472) einen Eingriffsbereich (4722) aufweist, der an einem von deren Enden ausgebildet ist, wobei der erste Eingriffsmechanismus (30), wenn der zweite Eingriffsmechanismus (40) in die zweite Richtung gedreht wird, simultan gedreht wird und zwar weil der Eingriffsbereich (4722) im Eingriff mit dem gezahnten Bereich (323) ist, um eine Geschwindigkeitsänderung zu bewirken.

7. Geschwindigkeitskontrollvorrichtung (100) nach Anspruch 6, bei der der gezahnte Bereich (323) an einem äußeren Umfang des ersten Eingriffsmechanismus (30) ausgebildet ist und eine Vielzahl von Zähnen umfasst, wobei jeder Zahn asymmetrisch ist, wobei die Kupplungsvorrichtung (47) eine Eingriffsoberfläche (4723) aufweist, die an einem von deren Enden ausgebildet ist, wobei die Eingriffsoberfläche (4723) einem Block (21a) des Körpers (21) entspricht, wobei der Block (21a) des Körpers (21), wenn der zweite Eingriffsmechanismus (40) in die erste Rotationsrichtung (R1) für den Kabelaufwickelbetrieb gedreht wird, so an der Eingriffsoberfläche (4721) anliegt, dass der Eingriffsbereich (4722) der Kupplungsvorrichtung (47) von dem gezahnten Bereich (323) des ersten gezahnten Elements (32) getrennt ist.

8. Geschwindigkeitskontrollvorrichtung (100) nach Anspruch 6, wobei der Körper (21) eine darauf ausgebildete Rückhaltefläche (21b) aufweist, wobei der Eingriffsbereich (4722) der Klauenvorrichtung (47), wenn der zweite Eingriffsmechanismus (40) in die zweite Rotationsrichtung (R2) bis zu einer maximalen Drehposition gedreht wird, an der Rückhaltefläche (21b) des Körpers (21) anliegt, um den zweiten Eingriffsmechanismus (40) davon abzuhalten, sich weiter in die zweite Rotationsrichtung (R2) zu drehen.

9. Geschwindigkeitskontrollvorrichtung (100) nach Anspruch 1, bei der der erste Eingriffsmechanismus (30) einen ersten gezahnten Bereich (333) umfasst, wobei die erste Klauenvorrichtung (22) eine erste Klaue (222) und ein erstes Vorspannelement (223) umfasst, wobei die erste Klaue (222) einen ersten Eingriffsbereich (2222), der an einem von deren Enden ausgebildet ist, und einen ersten anliegenden Bereich (2223) aufweist, der an dem anderen Ende ausgebildet ist, wobei das erste Vorspannelement (223) einen ersten Fuß, der sich von diesem erstreckt und mit dem ersten anliegenden Bereich (2223) der ersten Klaue (222) verbunden ist, und einen zweiten Fuß aufweist, der sich von diesem erstreckt und mit dem Körper (21) verbunden ist, so dass der erste Eingriffsbereich (2222) vorgespannt ist, um sich von dem ersten gezahnten Bereich (333) zu trennen.

10. Geschwindigkeitskontrollvorrichtung (100) nach Anspruch 1, bei der der erste Eingriffsmechanismus (30) einen zweiten gezahnten Bereich (334) umfasst, wobei die zweite Klauenvorrichtung (23) eine zweite Klaue (232) und ein zweites Vorspannelement (233) umfasst, wobei die zweite Klaue (232) einen zweiten Eingriffsbereich (2322), der an einem von deren Enden ausgebildet ist, und einen zweiten anliegenden Bereich (2323) aufweist, der an dem anderen Ende ausgebildet ist, wobei das zweite Vorspannelement (233) einen ersten Fuß, der sich von diesem erstreckt und mit dem zweiten anliegenden Bereich (2323) der zweiten Klaue (232) verbunden ist, und einen zweiten Fuß aufweist, der sich von diesem erstreckt und mit dem Körper (21) verbunden ist, so dass der zweite Eingriffsbereich (2322) vorgespannt ist, um sich von dem zweiten gezahnten Bereichen (334) zu trennen.

11. Geschwindigkeitskontrollvorrichtung (100) nach Anspruch 1, bei der das Fixierelement (20) eine daran angebrachte erste Rückhalteeinheit (24) umfasst, wobei der erste Eingriffsmechanismus (30) ein Vorspannelement (35) umfasst, das ein nahes Ende, das mit einem Begrenzungsbereich (242) der ersten Rückhalteeinheit (24) im Eingriff ist, und ein fernes Ende umfasst, das mit dem ersten Eingriffsmechanismus (30) im Eingriff steht, wobei das Fixierelement (20) eine daran angebrachte zweite Rückhalteeinheit (25) umfasst, wobei der zweite Eingriffsmechanismus (40) ein Vorspannelement (49) umfasst, das ein nahes Ende, das mit einem Begrenzungsbereich (252) der zweiten Rückhalteeinheit (25) im Eingriff ist, und ein fernes Ende umfasst, das mit der Eingriffsplatte (43) im Eingriff ist.

12. Geschwindigkeitskontrollvorrichtung (100) nach Anspruch 1, bei der der zweite Eingriffsmechanismus (40) ein Vorspannelement (48) umfasst, welches ein nahes Ende, das mit einem Begrenzungsbereich (219) des Körpers (21) im Eingriff ist, und ein fernes Ende umfasst, das mit der Kontrollplatte (42) im Eingriff ist.

13. Geschwindigkeitskontrollvorrichtung (100) nach Anspruch 2, bei der die Eingriffsplatte (43) ein Loch (431) umfasst, das sich durch diese hindurch erstreckt, wobei der Körper (21) eine Haltefläche (2181) umfasst, wobei die Haltefläche (2181) und eine Mitte des Lochs (431) eine Distanz kleiner als die zwischen dem ersten Vorsprung (24) und der Mitte des Lochs (131) zwischen sich aufweisen, wobei die Eingriffsplatte (43), wenn das Fangelement (41) sich in die zweite Rotationsrichtung (R2) dreht, aufgrund dessen, dass die zweite Auswölbung (415) des Fangelements (41) an der anliegenden Oberfläche (434) der Eingriffsplatte (43) anliegt, in die zweite Rotationsrichtung (R2) gedreht wird und der erste anliegende Bereich (2223) wird von dem ersten Vorsprung (432) getrennt, um mit der Haltefläche (2181) des Körpers (21) in Eingriff zu kommen.

## Revendications

1. Dispositif de contrôle de la vitesse (100) pour un dispositif de changement de vitesse de bicyclette qui peut fonctionner entre un mode d'opération d'enroulement de câble et un mode d'opération de relâchement de câble comprenant :
un ensemble de contrôle (2) comprenant un élément de fixation (20), un premier mécanisme d'encliquetage (30) relié de manière pivotante à l'élément de fixation (20) et un second mécanisme d'encliquetage (40) relié de manière pivotante à l'élément de fixation (20),
dans lequel l'élément de fixation (20) comprend un corps (21), un premier dispositif à cliquet (22) en prise de manière sélective avec le premier mécanisme d'encliquetage (30) et un second dispositif à cliquet (23) en prise de manière sélective avec le premier mécanisme d'encliquetage (30), avec l'élément de fixation (20) ayant une première portion reliée (215) où le premier dispositif à cliquet (22) est disposé et une seconde portion reliée (216) où le second dispositif à cliquet (23) est disposé,
dans lequel le premier mécanisme d'encliquetage (30) comprend un élément qui reçoit un câble (31), rotatif dans un premier sens de rotation (R1), pour monter la vitesse et un second sens de rotation (R2) pour baisser la vitesse,
dans lequel le second mécanisme d'encliquetage (40) comprend une plaque de contrôle (42), une plaque d'encliquetage (43) et un dispositif d'embrayage (47),
avec la plaque de contrôle (42) ayant une portion de bras (422), avec le dispositif d'embrayage (47) disposé sur la portion de bras (422) de la plaque de contrôle (42) et en prise de manière sélective avec le premier mécanisme d'encliquetage (30), dans lequel la plaque d'encliquetage (43) comprend une première saillie (432) et une seconde saillie (433) qui font saillie à partir d'une périphérie extérieure de celle-ci, avec la première (432) et la seconde (433) saillie correspondant respectivement au premier dispositif à cliquet (22) et au second dispositif à cliquet (23) et
dans lequel l'ensemble de contrôle (2) est adapté pour effectuer un changement de vitesse multiple en un coup du second mécanisme d'encliquetage (40), **caractérisé en ce**
**que** le second mécanisme d'encliquetage (40) comprend un élément d'entraînement (41) ayant un premier estampage (414) formé dessus, un levier de fonctionnement (44) couplé de manière pivotante à l'élément d'entraînement (41) et un élément de sollicitation (46) disposé entre l'élément d'entraînement (41) et le levier de fonctionnement (44) avec le levier de fonctionnement (44) sollicité par l'élément de sollicitation (46), dans lequel la plaque de contrôle (42) comprend une surface en butée (4221) correspondant au premier estampage (414) de l'élément d'entraînement (41), dans lequel, lorsque l'élément d'entraînement (41) tourne dans le second sens de rotation (R2), la plaque de contrôle (42) tourne dans le second sens de rotation (R2), ceci étant du au fait que la surface en butée (4221) est en butée par le premier estampage (414) de l'élément d'entraînement (41)
et en ce que l'élément d'entraînement (41) a un second estampage (415) formé dessus, dans lequel la plaque d'encliquetage (43) comprend une surface en butée (434) correspondant au second estampage (415) de l'élément d'entraînement (41), dans lequel, lorsque l'élément d'entraînement (41) tourne dans le premier sens de rotation (R1), la plaque d'encliquetage (43) tourne dans le premier sens de rotation (R1), ceci étant du au fait que la surface en butée (434) est en butée par le second estampage (425) de l'élément d'entraînement (41).

2. Dispositif de contrôle de la vitesse (100) selon la revendication 1 dans lequel le premier dispositif à cliquet (22) comprend une première section d'encliquetage (2222) et une première section en butée (2223) en butée par la première saillie (432) et le second dispositif à cliquet (23) comprend une seconde section d'encliquetage (2322) et une seconde section en butée (2323) en butée par la seconde saillie (433), dans lequel le premier mécanisme d'encliquetage (30) comprend une première section dentée (333) correspondant à la première section d'encliquetage (2222) et une seconde section dentée (334) correspondant à la seconde section d'encliquetage (2322), dans lequel, lorsque le second mécanisme d'encliquetage (40) n'est pas manoeuvré par un utilisateur, la première section d'encliquetage (2222) est dégagée de la première section dentée (333) et la seconde section d'encliquetage (2322) est en prise avec la seconde section dentée (334).

3. Dispositif de contrôle de la vitesse (100) selon la revendication 2 dans lequel la plaque d'encliquetage (43) comprend un trou (431) qui s'étend à travers celle-ci, dans lequel la première saillie (432) a une première portion (4321) et une seconde portion (4322), dans lequel la première portion (4321) et un centre du trou (431) a une distance entre eux qui est plus petite qu'entre la seconde portion (4322) et le centre du trou (431), dans lequel, lorsque la première section en butée (2223) du premier dispositif à cliquet (22) est en butée par la première portion (4321) de la première saillie (432), la première section d'encliquetage (2222) du premier dispositif à cliquet (22) est dégagée de la première section dentée (333), dans lequel, lorsque la première section en butée (2223) du premier dispositif à cliquet (22) est en butée par la seconde portion (4322) de la première saillie (432), la première section d'encliquetage (2222) du premier dispositif à cliquet (22) est en prise avec la première section dentée (333).

4. Dispositif de contrôle de la vitesse (100) selon la revendication 2 dans lequel la plaque d'encliquetage (43) comprend un trou (431) qui s'étend à travers celle-ci, dans lequel la seconde saillie (433) a une première portion (4331) et une seconde portion (4332), dans lequel la première portion (4331) et un centre du trou (431) a une distance entre eux qui est plus petite qu'entre la seconde portion (4332) et le centre du trou (431), dans lequel, lorsque la seconde section en butée (2323) du second dispositif à cliquet (23) est en butée par la première portion (4331) de la seconde saillie (433), la seconde section d'encliquetage (2322) du second dispositif à cliquet (23) est en prise avec la seconde section dentée (334), dans lequel lors que la seconde section en butée (2323) du second dispositif à cliquet (23) est en butée par la seconde portion (4332) de la seconde saillie (433), la seconde section d'encliquetage (2322) du second dispositif à cliquet (23) est dégagée de la seconde section dentée (334).

5. Dispositif de contrôle de la vitesse (100) selon la revendication 2 dans lequel chaque section dentée, la première section dentée (333) et la seconde section dentée (334), est formée sur une périphérie extérieure du premier mécanisme d'encliquetage (30) et comprend chacune une pluralité de dents dans laquelle chaque dent est asymétrique, dans lequel une pluralité de dents de la première section dentée (333) a un arrangement comme celui d'une pluralité de dents de la seconde section dentée (334), dans lequel la première section dentée (333) et la seconde section dentée (334) ont un décalage de phase entre elles.

6. Dispositif de contrôle de la vitesse (100) selon la revendication 2 dans lequel le premier mécanisme d'encliquetage (30) comprend une section dentée de retenue (323) formée sur sa périphérie extérieure et comprenant une pluralité de dents, dans lequel le dispositif d'embrayage (472) a une section d'encliquetage (4722) formée sur une extrémité de celui-ci, dans lequel, lorsque le second mécanisme d'encliquetage (40) est pivoté dans le second sens, le premier mécanisme d'encliquetage (30) tourne simultanément du au fait que la section d'encliquetage (4722) est en prise avec la section dentée (323) pour effectuer un changement de vitesse.

7. Dispositif de contrôle de la vitesse (100) selon la revendication 6 dans lequel la section dentée (323) est formée sur une périphérie extérieure du premier mécanisme d'encliquetage (30) et comprend respectivement une pluralité de dents dans laquelle chaque dent est asymétrique, dans lequel le dispositif d'embrayage (47) a une surface d'encliquetage (4723) formée sur une extrémité de celui-ci, dans lequel la surface d'encliquetage (4723) correspond à un bloc (21a) du corps (21), dans lequel, lorsque le second mécanisme d'encliquetage (40) est pivoté dans le premier sens de rotation (R1) pour l'opération d'enroulement de câble, la surface d'encliquetage (4723) est en butée par le bloc (21a) du corps (21) si bien que la section d'encliquetage (4722) du dispositif d'embrayage (47) est dégagée de la section dentée (323) du premier élément denté (32).

8. Dispositif de contrôle de la vitesse (100) selon la revendication 6 dans lequel le corps (21) a une surface de retenue (21b) formé dessus, dans lequel, lorsque le second mécanisme d'encliquetage (40) est pivoté dans le second sens de rotation (R2) à une position de pivotement maximale, la section d'encliquetage (4722) du dispositif à cliquet (47) est en butée avec la surface de retenue (21b) du corps (21) pour empêcher le second mécanisme d'encliquetage (40) de continuer à tourner dans le second sens de rotation (R2).

9. Dispositif de contrôle de la vitesse (100) selon la revendication 1 dans lequel le premier mécanisme d'encliquetage (30) comprend une première section dentée (333), dans lequel le premier dispositif à cliquet (22) comprend un premier cliquet (222) et un premier élément de sollicitation (223), dans lequel le premier cliquet (22) a une première section d'encliquetage (2222) formée sur une extrémité de celui-ci et une première section en butée (2223) formée sur l'autre extrémité de celui-ci, dans lequel le premier élément de sollicitation (223) comprend un premier montant qui s'étend à partir de celui-ci et qui est relié à la première section en butée (2223) du premier cliquet (222) et un second montant qui s'étend à partir de celui-ci et qui est relié au corps (21) si bien que la section d'encliquetage (2222) est sollicitée pour se dégager de la première section dentée (333).

10. Dispositif de contrôle de la vitesse (100) selon la revendication 1 dans lequel le premier mécanisme d'encliquetage (30) comprend une seconde section dentée (334), dans lequel le second dispositif à cliquet (23) comprend un second cliquet (232) et un second élément de sollicitation (233), dans lequel le second cliquet (232) a une seconde section d'encliquetage (2322) formée sur une extrémité de celui-ci et une section en butée (2323) formée sur l'autre extrémité de celui-ci, dans lequel le second élément de sollicitation (233) comprend un premier montant qui s'étend à partir de celui-ci et qui est relié à la seconde section en butée (2323) du second cliquet (232) et un second montant qui s'étend à partir de celui-ci et qui est relié au corps (21) si bien que la seconde section d'encliquetage (322) est sollicitée pour se mettre en prise avec la seconde section dentée (334).

11. Dispositif de contrôle de la vitesse (100) selon la revendication 1 dans lequel l'élément de fixation (20) comprend une première unité de retenue (24) installée sur celui-ci, dans lequel le premier mécanisme d'encliquetage (30) comprend un élément de sollicitation (35) comprenant une extrémité proximale qui est en prise avec une portion de délimitation (242) de la première unité de retenue (24) et une extrémité distale qui est en prise avec le premier mécanisme d'encliquetage (30), dans lequel l'élément de fixation (20) comprend une seconde unité de retenue (25) installée sur celui-ci, dans lequel le second mécanisme d'encliquetage (40) comprend un élément de sollicitation (49) comprenant une extrémité proximale en prise avec une portion de délimitation (252) de la seconde unité (25) et une extrémité distale en prise avec la plaque d'encliquetage (43).

12. Dispositif de contrôle de la vitesse (100) selon la revendication 1 dans lequel le second mécanisme d'encliquetage (40) comprend un élément de sollicitation (48) qui comprend une extrémité proximale en prise avec une portion de délimitation (219) du corps (21) et une extrémité distale en prise avec la plaque de contrôle (42).

13. Dispositif de contrôle de la vitesse (100) selon la revendication 2 dans lequel la plaque d'encliquetage (43) comprend un trou (431) qui s'étend à travers, dans lequel le corps (21) comprend une surface de support (2181), dans lequel la surface de support (2181) et un centre du trou (431) a une distance entre eux qui est plus petite que celle de la première saillie (432) et du centre du trou (431), dans lequel, lorsque l'élément d'entraînement (41) tourne dans le second sens de rotation (R2), la plaque d'encliquetage (43) tourne dans le second sens de rotation (R2), ceci étant du au fait que la surface en butée (434) de la plaque d'encliquetage (43) est en butée par le second estampage (425) de l'élément d'entraînement (41) et la première section en butée (2223) est dégagée de la première saillie (432) pour être en prise avec la surface de support (2181) du corps (21).
